# EUROPEAN PATENT APPLICATION

(11) **EP 1 696 255 A1**
(43) Date of publication of application: **30.08.2006**
(21) Application number: 03780859.9
(22) Date of filing: 17.12.2003
(51) Int. Cl.: G02B 7/04

(54) **AUTOMATIC FOCUSING DEVICE**

(71) Applicant: Nokia Corporation, 02150 Espoo (FI)
(72) Inventor: ITO, Makoto, Toda-shi, Saitama 335-0023 (JP)
(74) Representative: TBK-Patent
(86) International application number: PCT/JP2003/016193
(87) International publication number: WO 2005/059615

(57) **Abstract**

An autofocus system which can be applied even to small apparatuses is provided, and an improvement in accuracy of measurement of the positions of lenses when a piezo actuator is used to control the positions of the lenses is achieved. An autofocus system comprises a camera lens support, a piezo actuator, stoppers, and pressure sensors, wherein the camera lens support supports camera lenses, the piezo actuator moves the camera lens support for autofocusing, the stoppers prevent excessive movement of the camera lenses moved by the piezo actuator, and the pressure sensors are situated in the vicinities of the stoppers and detect collision with the camera lenses moved by the piezo actuator.

## Description

### BACKGROUND OF THE INVENTION

### (i) Field of the Invention

The present invention relates to an autofocus system, especially, to an autofocus system using a piezo actuator.

### (ii) Description of the Related Art

Most of relatively large apparatuses such as a video camera are equipped with an autofocus system as a standard system. In recent years, an attempt to apply this autofocus system to relatively small apparatuses such as a camera-equipped cellular phone and a PDA has started. To implement autofocusing in the autofocus system, such a device as a stepping motor or a piezo actuator is generally used as a device that is currently available as an actuator for moving a camera lens.

An advantage of using the stepping motor consists in accurate pulse control. In other words, the moving distance (moving distance per pulse) of a lens by the stepping motor is highly accurate. However, the stepping motor is forced to be a relatively large device (generally, its diameter is 6 to 8 mm and its length is 6 to 10 mm) because it requires driving parts such as a lead screw and gears, an electrical circuit and a sensor so as to move the lens. Further, it consumes a very large amount of power (generally, 150 mA or higher) due to mechanical driving thereof.

Meanwhile, the piezo actuator (actuator using a piezoelectric element) has such advantages that it is smaller than the stepping motor and thin, has high impact resistance and consumes a small amount of power. However, the piezo actuator is also not used in small apparatuses such as a camera-equipped cellular phone at present. The reason consists in insecure pulse control of the piezo actuator. In other words, the moving distance of a lens by the piezo actuator is readily changed by an environmental change or a mechanical change (such as a change in load). Because of having such a problem, although the piezo actuator has been used for continuous focusing on a moving subject in an apparatus such as a video camera as disclosed in, e.g. Japanese Patent Application Laid-Open No. 97379/1991, it has never been used in cameras for still images which require highly accurate focusing. However, if there exists an absolute position sensor which can compensate control of the position of a lens when the piezo actuator is used, it is considered possible to use the piezo actuator in cameras for still images. However, in camera modules used in small apparatuses such as cellular phones, an autofocus system having such a sensor has not yet existed. Accordingly, it is considered inappropriate to use the piezo actuator in small apparatuses.

Meanwhile, in the field of camera-equipped cellular phones, for example, an increase in resolution has been proceeding rapidly, and it has been increasingly required to implement higher-precision focusing. As a result, standard installation of autofocus system in camera-equipped cellular phones as well as video cameras is desired.

### SUMMARY OF THE INVENTION

An object of the present invention is to provide an autofocus system which can be applied even to small apparatuses. Another object of the present invention is to achieve an improvement in accuracy of measurement of the positions of lenses when a piezo actuator is used to control the positions of the lenses.

The present invention makes a piezo actuator usable as an actuator for controlling the positions of lenses by adding pressure sensors to a camera module.

An autofocus system of the present invention comprises:
a camera lens support,
a piezo actuator,
stoppers, and
pressure sensors,
wherein
the camera lens support supports a camera lens,
the piezo actuator moves the camera lens support for autofocusing, the stoppers prevent excessive movement of the camera lenses moved by the piezo actuator, and
the pressure sensors are situated in the vicinities of the stoppers and detect collision with the camera lenses moved by the piezo actuator.

In the above autofocus system, the pressure sensors are disposed at a macro position and an infinite position and can detect whether the camera lens is present at the macro position, the infinite position or a position between the macro and infinite positions. The above autofocus system can be installed in a variety of portable electronic devices.

### BRIEF DESCRIPTION OF THE DRAWINGS

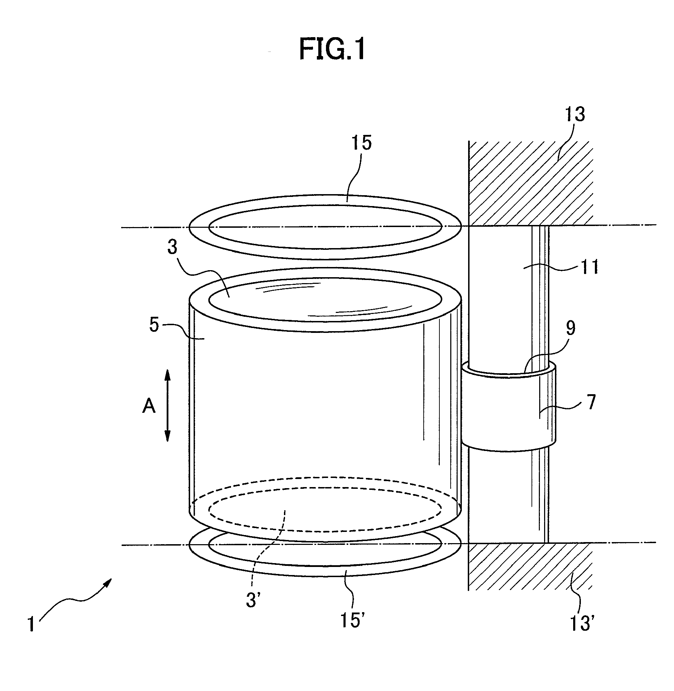

Fig. 1 is a schematic diagram illustrating an autofocus system according to the present invention.

### DETAILED DESCRIPTION OF THE PREFERRED EMBODIMENT

An example of an autofocus system according to a suitable embodiment of the present invention will be described with reference to Fig. 1. This diagram is a schematic diagram illustrating an autofocus system according to the present invention. The autofocus system of the present invention can be applied to a wide variety of electronic devices having a photograph function, such as a digital camera, a camera-equipped telephone, a camera-equipped PDA, a camera-equipped watch and a camera-equipped computer. However, it is considered that the autofocus system of the present invention is particularly well-suited to small, portable electronic devices.

An important characteristic of the present invention is that pressure sensors which detect collision with camera lenses (focusing lenses) are disposed at positions where the camera lenses stop to improve the accuracy of measurement of the positions of the lenses.

As is obvious from Fig. 1, camera lenses 3 and 3' are supported on both ends of a cylindrical camera lens support 5. At the middle of the side face of the camera lens support 5, a ring-shaped slide member 7 is provided. A support shaft 11 penetrates through a through hole 9 of the slide member. The camera lenses 3 and 3' are slid along the support shaft 11 in the direction indicated by the arrow A shown in Fig. 1, for example. The lenses are slid by a piezo actuator (not shown). That is, the piezo actuator is used as an actuator for moving lenses. However, control of the positions of lenses by the piezo actuator is inaccurate, as described above. For this reason, in the present invention, especially for preventing excessive movement of the camera lenses, mechanical stoppers 13 and 13' are provided at opposing positions at which the stoppers can collide with the camera lenses 3 and 3' moved by the piezo actuator. Further, in the vicinities of these stoppers 13 and 13', e.g. on these stoppers, thin pressure sensors 15 and 15' are fixed, respectively, so that the positions of the lenses can be measured with high accuracy. These pressure sensors 15 and 15' are not of special configuration, and ordinary, commercially available pressure sensors which are used in video game controllers as well can be used as the pressure sensors 15 and 15'. Therefore, the pressure sensors can be obtained at low cost.

In the above constitution, even if the camera lenses 3 and 3' are moved by the piezo actuator and collide with the stopper 13 or 13', no means for detecting whether the camera lenses 3 and 3' are situated at the position of the stopper 13 or 13' has so far been available. However, in the present invention, when the camera lenses 3 and 3' are moved by the piezo actuator and contact the pressure sensor 15 or 15', pressure produced by the contact is detected by the pressure sensor. By this pressure detection, the autofocus system of the present invention can measure the positions of the camera lenses with high accuracy. For instance, as in the example illustrated in Fig. 1, when the stopper 13 is positioned at a macro position of the camera lens 3, i.e. a position for photographing a closer subject, and the stopper 13' is positioned at an infinite position of the camera lens 3', i.e. a position for photographing a farther subject, it can be readily detected through the pressure detection whether the camera lens is present at the macro position, the infinite position or a position between the macro position and the infinite position. Accordingly, even if control of the positions of the lenses by the piezo actuator is somewhat inaccurate, the inaccuracy is compensated by the actions of these pressure sensors 15 and 15', whereby it can be securely detected whether the camera lens is present at the position of the stopper 13 or 13'. Therefore, according to the present invention, the positions of lenses can be defined accurately at at least two points and can be used for autofocusing or macrophotography. As described above, according to the constitution of the present invention, the piezo actuator can be used as an actuator for controlling the positions of lenses by adding the pressure sensors to a camera module.

As a method of measuring the position of a camera lens, a method of counting time is also conceivable, in addition to the method of the present invention. However, such a time counting method is not practical because the lens moving distance (time) of the piezo actuator is insecure and it takes long time to implement autofocusing.

According to the above present invention, since the positions of lenses can be detected with high accuracy despite use of the piezo actuator as an actuator for controlling the positions of the lenses, an autofocus system which can be applied even to small apparatuses can be provided. Further, by use of the piezo actuator, a reduction in the size of the system, simplification of the structure of the system and reductions in cost and power consumption can be achieved. The present invention can be applied to a wide variety of relatively small apparatuses incorporating an autofocus system.

## Claims

1. An autofocus system comprising:
a camera lens support,
a piezo actuator,
stoppers, and
pressure sensors,
wherein
the camera lens support supports camera lenses,
the piezo actuator moves the camera lens support for autofocusing,
the stoppers prevent excessive movement of the camera lenses moved by the piezo actuator, and
the pressure sensors are situated in the vicinities of the stoppers and detect collision with the camera lenses moved by the piezo actuator.

2. The autofocus system of 1, wherein the pressure sensors are disposed at a macro position and an infinite position and can detect whether the camera lens is present at the macro position, the infinite position or a position between the macro and infinite positions.

3. A portable electronic device comprising the autofocus system of claim 1 or 2.
